Europäisches Patentamt

(19) European Patent Office

Office européen des brevets

(11) EP 0 610 137 B1

(12) FASCICULE DE BREVET EUROPEEN

(45) Date de publication et mention
de la délivrance du brevet:
17.12.1997 Bulletin 1997/51

(51) Int. Cl.⁶: A01G 31/00

(21) Numéro de dépôt: 94400223.7

(22) Date de dépôt: 02.02.1994

(54) **Installation pour la culture hors-sol de plantes**

Anlage für die erdlose Pflanzenkultur

Unit for soilless plant culture

(84) Etats contractants désignés:
AT BE CH DE DK ES FR GB GR IE IT LI LU NL PT
SE

(30) Priorité: 03.02.1993 FR 9301185

(43) Date de publication de la demande:
10.08.1994 Bulletin 1994/32

(73) Titulaire: SOCIETE GERAFLOR
F-22590 Pordic (FR)

(72) Inventeurs:
• **Laperche, Olivier**
F-22590 Tregomeur (FR)
• **Digat, Bernard**
F-49000 Cantenay-Epinard (FR)
• **Theuveny, Christian**
F-78240 Chambourcy (FR)

(74) Mandataire: **Phélip, Bruno et al**
c/o **Cabinet Harlé & Phélip**
**21, rue de La Rochefoucauld**
**75009 Paris (FR)**

(56) Documents cités:
WO-A-82/03529         AT-B-  312 983
AT-B-  318 967        FR-A- 2 517 173
FR-A- 2 646 397       GB-A- 1 457 920
US-A- 4 476 651

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne une installation pour la culture des plantes hors-sol.

Selon une technique connue, les organes végétaux sont placés dans un substrat ou support en une matière solide insoluble dans l'eau, disposée dans un élément de contention, de manière à ce que les plantes ne soient plus en contact avec le sol. La culture hors-sol procure une production végétale améliorée.

Egalement, ce type de culture permet d'échapper aux parasites telluriques et facilite la maîtrise de l'irrigation fertilisante. Il s'ensuit une augmentation de l'efficience de travail en général.

La demande de brevet internationale WO-82/03.529 décrit un système de culture de ce type, dans lequel un substrat est entouré par un film plastique sous forme d'un sac de petites dimensions, conçu pour recevoir une plante, qui est introduite par une ouverture pratiquée à la partie supérieure du sac. Le substrat de culture est irrigué par de l'eau contenant les additifs nécessaires à la culture des plantes et pouvant être évacuée par une ou plusieurs ouvertures pratiquées à la partie opposée du sac. Les sacs sont suspendus verticalement.

Diverses solutions ont été proposées, ayant pour objectif une utilisation rationnelle du volume des serres dans lesquelles sont disposées les installations.

Une solution préférée consiste à effectuer des cultures verticales à l'aide de colonnes suspendues remplies d'un substrat approprié et alimentées en solution nutritive.

Néanmoins, il a été relevé certains inconvénients dans ce type de culture, dûs notamment à l'irrégularité de l'éclairage des plantes, différant selon leur orientation, et surtout au fait que les modules ne peuvent pas être déplacés à l'intérieur de la serre.

La demande de brevet FR-A-2.517.173 propose une installation du type ci-dessus, dans laquelle l'élément de contention est constitué de manière à donner à la masse de substrat la forme générale d'un "matelas" vertical, orienté Nord-Sud et définissant deux plans de cultures verticaux parallèles et tournés vers l'Est et l'Ouest respectivement, les orifices d'implantation étant ménagés dans les deux faces opposées dudit "matelas".

Selon un exemple d'application décrit dans ce même document, le "matelas" est constitué par une succession d'éléments modulaires cylindriques indépendants et placés verticalement côte à côte suivant un plan continu, lesdits éléments étant de préférence montés suspendus et orientables autour de leur axe vertical.

Le pivotement ainsi rendu possible permet une orientation choisie des plantes mais nécessite des interventions manuelles fréquentes. De plus, on comprend aisément que les éléments modulaires ne seront pas éclairés uniformément selon leur position dans la serre et leur position par rapport aux autres éléments des rangées adjacentes. En outre, si les éléments modulaires sont susceptibles de pouvoir être orientés autour de leur axe vertical, en revanche leur position géographique dans la serre est fixe.

Le brevet AT-B-318.967 décrit une installation pour la culture hors sol de plantes avec des modules suspendus verticalement. Chaque module comporte un substrat, enroulé autour d'un support vertical ou contenu dans un contenant approprié, sur lequel les plantes sont piquées. Si les modules peuvent être déplacés en translation, en revanche il n'est pas prévu de pouvoir les animer d'un mouvement rotatif autour de leur axe vertical. De plus, les modules se déplacent en continu selon un parcours sinueux, sur lequel le document AT-B-318.967 n'apporte aucun enseignement.

La présente invention a pour but de résoudre les différents problèmes précités, de manière à optimiser au maximum la culture verticale hors-sol.

A cet effet, elle concerne une installation pour la culture hors-sol de plantes, comprenant des modules mobiles, suspendus verticalement de manière à former des lignes de modules, dans lesquels sont piquées les plantes et sont qui alimentés par une solution nutritive.

L'installation selon l'invention est caractérisée en ce que chacun desdits modules comprend un contenant de forme cylindrique dont le diamètre est compris environ entre 5 et 50 cm et dont la hauteur "hl" est comprise environ entre 20 cm et 300 cm, et un moyen de culture renfermé dans le contenant, en ce que les modules sont animés, d'une part, d'un mouvement rotatif autour de leur axe vertical pour l'obtention d'une répartition adéquate de la lumière pour chaque plante d'un même module, le rythme de le rotation étant adapté aux besoins d'homogénéisation de la lumière et aux exigences photopériodiques de l'espèce cultivée et, d'autre part, d'un mouvement de translation permettant de déplacer horizontalement les modules, et en ce que les séries de modules parallèles constituent des zones séparées entre elles par une aire d'intervention avec des moyens de transfert latéral dans un sens depuis l'extrémité d'une zone, vers la zone voisine dans laquelle les modules se déplacent en sens inverse, après passage dans ladite aire d'intervention, qui est isolée, par rapport aux zones de translation.

La faculté de déplacement en rotation et en translation des séries de modules verticaux conduit à un traitement en continu à l'intérieur d'une serre, en facilitant les interventions pratiquées par les opérateurs (mises en place des plantes, effeuillages, tailles, coupes, récoltes, etc...). De telles interventions peuvent ainsi être pratiquées à poste fixe.

La solution nutritive utilisée pour alimenter les plantes, contient avantageusement une microflore antagoniste des microorganismes pathogènes de l'espèce végétale cultivée et stimulatrice de la croissance.

Pour des raisons d'économie ainsi que pour mener à bien la lutte biologique contre les microorganismes pathogènes, la solution nutritive est recirculée, comme il sera décrit plus loin.

Selon un premier mode de réalisation, le moyen de culture est un substrat composé de fibres, dont le foisonnement naturel offre un volume d'air compris entre 30 et 35%, lesdites fibres étant compactées pour obtenir une densité supérieure à 50 kg/m$^3$, préférentiellement comprise entre 100 kg/m$^3$ et 300 kg/m$^3$.

La présente invention concerne également les caractéristiques ci-après, dudit premier mode de réalisation, considérées isolément ou selon toutes leurs combinaisons techniquement possibles.

Le contenant est un élément de contention constitué d'un matériau inextensible et perçable sans se déchirer lors du piquage des plantes dans le substrat.

Ce matériau est préférentiellement plastique, de couleur blanche et opaque, et d'une épaisseur de 90 μm à 100 μm.

De plus, de manière à accroître sa solidité, un filet à petites mailles peut être disposé à l'intérieur et/ou à l'extérieur dudit élément de contention.

Ce filet peut être réalisé en polyéthylène ou polypropylène rétractable et assure une meilleure tenue du substrat.

Préférentiellement, les plants sont piqués dans chaque module selon une configuration en spirale ou hélice.

Les modules sont chacun alimentés par une solution nutritive, qui percole de haut en bas du module.

Le substrat présente des propriétés telles qu'en combinaison avec les dimensions du module, elles permettent une bonne percolation de la solution nutritive pour son enrichissement régulier et homogène sur toute sa hauteur, notamment en sels minéraux.

Pour ce faire, le substrat possède les propriétés suivantes :

- faible capacité d'échange, car la culture est hors-sol;
- stérilité pour éviter les problèmes phytosanitaires,
- de texture fibreuse, afin de faciliter le développement vertical des racines,
- léger, pour ne pas pénaliser le déplacement des modules par une masse trop importante,
- drainant, afin d'optimiser l'utilisation de la solution nutritive,
- hydrophile, afin d'obtenir une bonne rétention en eau,
- compacté de façon homogène, afin d'assurer une structure et une densité régulières,
- recyclable, afin de réduire les problèmes de pollution causés par le stockage des déchets et le rendre ainsi économique.

Un tel substrat peut être obtenu à partir d'éléments:

- naturels, tels que tourbes, pouzzolanes, écorces, sciure, fibres et copeaux de bois, fibres végétales ou animales,
- artificiels, tels que fibres de verre, de silicate, fibres obtenues à partir de roche en fusion, perlite, argile expansée.
- ou des mélanges de tels éléments naturels et artificiels.

Le choix ultime du substrat peut être réalisé par l'homme du métier en tenant compte de la nature des plantes à cultiver. Des indications illustratives sont données ci-après.

Un substrat qui a donné de bons résultats dans la pratique est du genre décrit dans la demande de brevet FR-A-2.646.397, de la Société Wogegal. Cette demande a pour objet une installation pour le remplissage en continu d'une enveloppe tubulaire avec un matériau fibreux, dont la densité peut être contrôlée. Le matériau est avantageusement constitué de fibres de bois et l'enveloppe par un filet en matière synthétique. Les produits obtenus se présentent sous forme de pains de longueur variable.

Selon l'expérience acquise jusqu'à présent pour la mise en oeuvre de l'invention, les modules peuvent avoir avantageusement un diamètre de 15 cm environ et une hauteur de 1,50 à 1,80 m, avec, en combinaison, un substrat cylindrique contenu dans le module, dont le poids total ne dépasse pas 15 kg environ lorsqu'il est saturé de solution nutritive.

L'invention couvre également une variante de réalisation dans laquelle le substrat de culture imprégné de solution nutritive est remplacé intégralement par une pulvérisation de solution nutritive, assurant à elle seule et sans substrat solide, l'alimentation de la plante.

Selon cette variante, le moyen de culture du module consiste en une atmosphère aqueuse saturée d'une solution nutritive, selon la technique dite aérohydroponique.

Dans ce cas, le contenant est constitué par une enveloppe rigide et imperméable.

Selon cette variante, des buses traversent la paroi du contenant et assurent une pulvérisation cyclique et contrôlée de substance nutritive.

Les plantes sont dans ce cas fixées sur le contenant par l'intermédiaire d'une motte de substrat hors-sol.

Que les plantes soient alimentées par la solution nutritive selon la technique hydroponique ou selon la technique aérohydroponique, la solution peut avantageusement contenir complémentairement une microflore antagoniste des microorganismes pathogènes des plantes cultivées et stimulatrice de la croissance de ces plantes.

Dans une installation selon l'invention, les modules peuvent avantageusement être suspendus verticalement sur des chariots transporteurs en liaison avec des organes porteurs ou rails, pour former des lignes de modules entraînées dans un plan horizontal par l'intermédiaire de moyens d'entraînement en translation.

Préférentiellement, les chariots ou lignes de modules sont parallèles entre eux selon un écartement de 50 à 90 cm, régulier ou non.

Les modules peuvent être espacés les uns des autres de 35 à 80 cm environ pour disposer de 2 à 5 modules au mètre carré.

Selon un agencement particulier de l'installation, celle-ci comporte au moins deux séries de lignes de modules parallèles, disposées également de manière parallèle entre elles.

Par ailleurs, la solution nutritive, introduite dans chaque module est récupérée à la partie inférieure de celui-ci par un dispositif de récupération, gouttière par exemple, sol en pente, drain ou autre, ladite solution étant ensuite recyclée à l'aide d'une pompe.

Ladite solution nutritive est avantageusement rééquilibrée au moins une fois par semaine à l'aide d'une station de fertilisation, gérée par ordinateur.

Les plantes bénéficient également d'un éclairage artificiel classique complémentaire disposé sous les modules et dont les rayons lumineux sont diffusés du bas vers le haut.

Les déficits éventuels de lumière peuvent être corrigés ponctuellement par des fibres optiques transportant une lumière froide à proximité immédiate des plantes et selon des longueurs d'ondes correspondant à celles absorbées par lesdites plantes.

L'invention sera encore illustrée, sans être aucunement limitée, par la description qui suit, faite en regard des dessins annexés sur lesquels :

La Figure 1 représente partiellement une installation, de culture verticale hors sol selon l'invention montrant deux modules suspendus, dont l'un est vu en coupe.

La Figure 2 représente une vue en coupe transversale d'une serre dotée d'une installation, selon l'invention.

La Figure 3 représente une vue de dessus d'une serre dotée d'une installation, selon l'invention, suivant une implantation particulière.

La Figure 4 est une vue de détail selon la Figure 3.

La Figure 5 est une vue en coupe d'un module à culture aérohydroponique.

La Figure 6 est une vue en bout selon le sens de la flèche F de la Figure 4.

La Figure 7 montre une variante d'installation selon l'invention, d'une manière similaire à la Figure 1.

La Figure 8 montre une variante d'installation, d'une manière similaire à la Figure 2.

La Figure 9 montre une variante de module, d'une manière similaire à la Figure 5.

La Figure 10 montre une variante d'installation, d'une manière similaire à la Figure 6.

L'installation qui est décrite ci-après est destinée à la production de plantes à boutures, plantes à fleurs, plantes décoratives, plantes médicinales, plantes à usages agro-alimentaires et similaires. Elle permet aussi de produire toutes sortes d'organes végétaux provenant des plantes, tels que boutures, feuilles, fleurs, fruits etc... .

L'installation comprend une pluralité de modules de culture 1 suspendus verticalement.

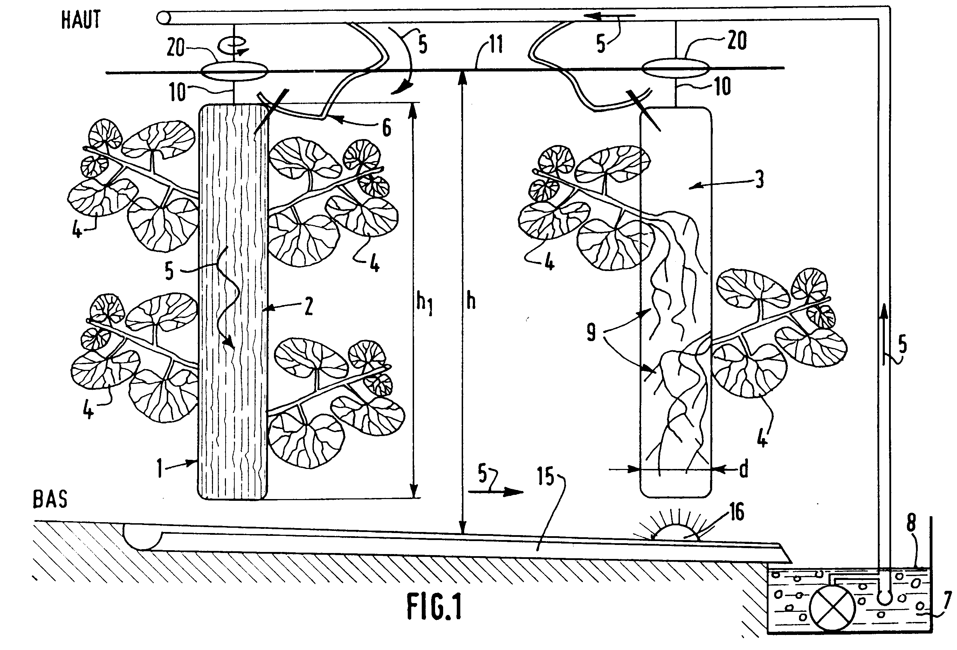

Selon la Figure 1, chacun des modules 1 comprend un élément de contention 2 dans lequel est placé un substrat 3, formant un support dans lequel sont piquées les plantes 4.

L'irrigation du substrat 3 s'effectue par percolation d'une solution nutritive complète 5 qui est amenée par au moins un capillaire 6 au sommet du module 1. La solution percole de haut en bas dans chaque module et est récupérée dans une gouttière commune 15, puis dans un réservoir 8. Elle circule grâce à un système de pompe 7 permettant une aération et un recyclage continu.

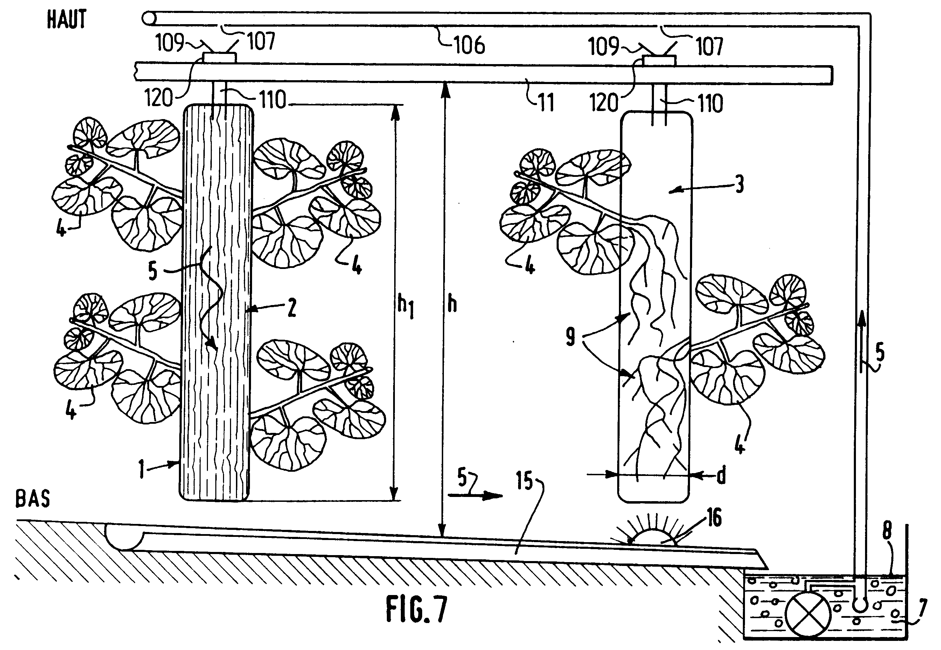

En variante (voir Figure 7), la solution nutritive complète 5 peut être amenée par un conduit 106 par des ouvertures calibrées 107 au sommet du module 1. La solution sortant du conduit 106 entre par un entonnoir 109 dans un tube canaliseur 110, à l'extrémité inférieure duquel le substrat 3 est attaché.

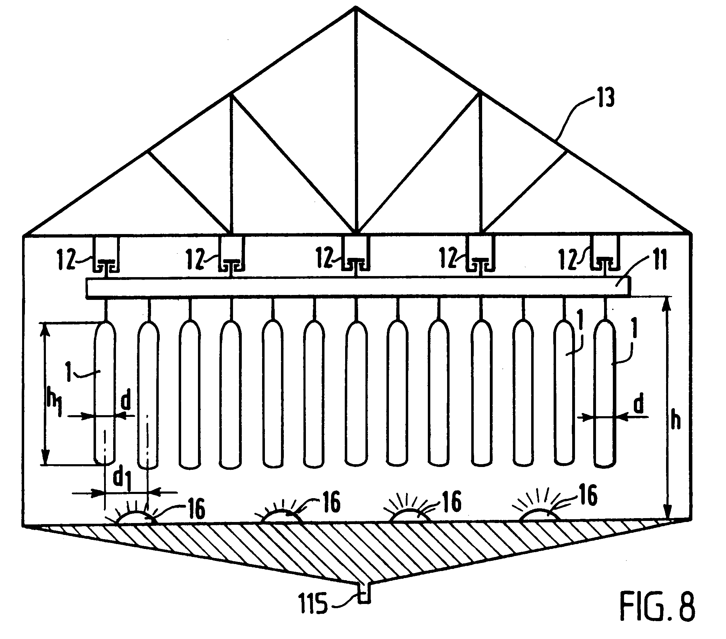

Dans la variante représentée aux Figures 7 et 8, la solution nutritive percole de haut en bas, depuis l'extrémité inférieure du tube 110 dans chaque module et est récupérée par une gouttiere commune 15 (Figure 7) ou un drain commun 115 (Figure 8) jusqu'à un réservoir 8. Elle circule grâce à un système de pompe 7 permettant une aération et un recyclage continu.

Le recyclage de la solution nutritive comprend essentiellement les étapes de désinfection de la solution récupérée et de rebactérisation avec des microorganismes antagonistes des microogranismes pathogènes de l'espèce cultivée. De préférence, on ajoute également, dans une étape suivante ou en même temps que la rebactérisation, une microflore stimulatrice de la croissance. Par le recyclage de la solution nutritive, on peut éviter totalement le rejet des effluents de culture et donc la pollution de l'environnement.

De manière plus précise, le module 1 est de forme cylindrique de manière à permettre une répartition très régulière du substrat 3 et de la solution nutritive 5 à l'intérieur de ce substrat. De plus, cette forme permet une répartition plus homogène de la lumière et un travail facilité surtout lors des mouvements relatifs ultérieurs dudit module vertical.

L'absence d'angles évite tous risques de déchirure de l'élément de contention 2.

La hauteur "h1" d'un module doit être supérieure à 20 cm, ceci représentant le minimum économique par rapport à la culture en pot. Elle doit aussi être inférieure à 300 cm afin de rester dans des normes autorisant le travail d'un opérateur et surtout d'assurer une répartition homogène de la solution nutritive de percolation.

Les essais ont démontré également que le diamètre "d" d'un module 1 doit être supérieur à 5 cm pour ne pas multiplier leur nombre au mètre carré et inférieur à 50 cm pour avoir un nombre suffisant de pied-mères au mètre carré et faciliter le travail et surtout le déplacement des modules. En effet, au-delà d'un tel diamètre, des problèmes de masse du module 1, de résistance de l'élément de contention 2 et de déplacement seraient gênants pour le bon fonctionnement de l'installation.

En ce qui concerne l'élément de contention 2, celui-ci est constitué par une enveloppe réalisée dans un matériau léger, solide, et facile à percer sans risque de déchirure.

Sa couleur a de l'importance pour la réflexion de la lumière naturelle et/ou artificielle. Elle doit donc être la plus claire possible, blanche de préférence.

Le matériau utilisé, qu'il soit souple ou rigide, est préférentiellement un composé plastique opaque de manière à éviter le développement de mousses et d'algues à l'intérieur du module 1.

La solidité de celui-ci est accrue par l'utilisation, à l'extérieur ou à l'intérieur, d'un filet à petites mailles d'un diamètre d'environ 1 cm, réalisé en polyéthylène ou polypropylène, (non représenté).

Les essais ont démontré que l'enveloppe constituant l'élément de contention 2 devait avoir une épaisseur d'environ 100 $\mu$m. Au-dessous de cette valeur, une solution simple et économique consiste à mettre deux enveloppes l'une dans l'autre, avec ou sans filet complémentaire.

En ce qui concerne le substrat 3, celui-ci est composé de fibres dont le foisonnement naturel offre un volume d'air compris entre 30 et 35%, lesdites fibres étant compactées pour obtenir une densité supérieure à 50 kg/m$^3$, préférentiellement comprise entre 100 kg/m$^3$ et 300 kg/m$^3$.

Les dimensions de l'élément de contention 2 ainsi que la nature et la densité du substrat 3 constituent une combinaison de moyens aboutissant à un rendement maximum.

Les essais ont montré qu'un substrat à base de fibres de bois de type "Hortifibre", compactées selon des valeurs se situant entre 200 et 220 kg/m$^3$, offrait de très bonnes performances pour la culture de Pelargonium x Sp alors que la culture de la tomate demandait un compactage plus faible, de l'ordre de 100 kg/m$^3$.

L'installation selon l'invention comporte également des moyens de montage rotatifs et translatifs automatisés des modules de culture 1, à savoir :

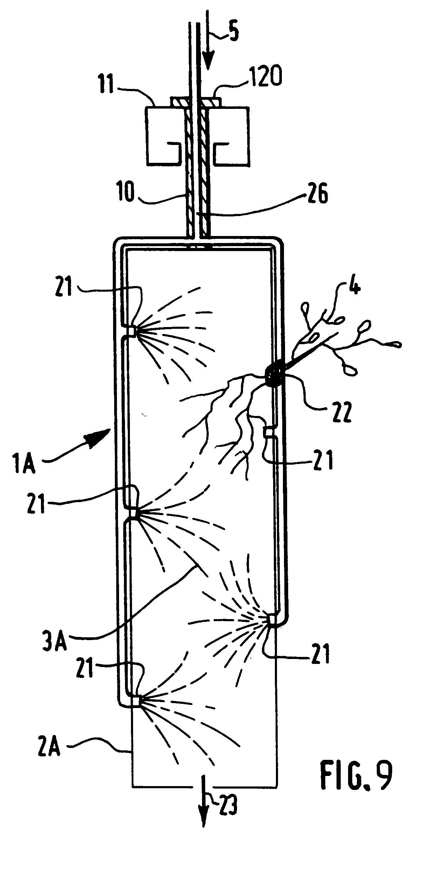

- d'une part, un système rotatif, selon l'axe vertical 10 qui permet d'obtenir une meilleure répartition de la lumière naturelle ou artificielle pour chaque plante 4 en faisant pivoter sur lui-même chaque module de culture 1 par l'intermédiaire d'une poulie 20 (voir Figures 1, 2 et 5) ou d'un roulement à billes 120 (variante des Figures 7 et 9). Le rythme de la rotation est adapté aux besoins d'homogénéisation de la lumière et aux exigences photopériodiques des espèces cultivées,
- d'autre part, un système translatif qui permet de déplacer horizontalement les modules 1 de manière à faciliter les pratiques culturales: récoltes, effeuillages, pincements, tailles, coupes, traitements, surveillances, analyses sanitaires.

Le système translatif peut être réalisé sur des chariots transporteurs 11 ou sur des barres, sur rouleaux ou grâce à des ponts roulants. Les barres ou les chariots 11 forment des lignes de modules 1, qui coulissent dans des éléments porteurs 12 ou rails. Ce système permet de limiter les déplacements des opérateurs dans la serre de culture, ce qui limite également les contaminations pouvant être causées par ceux-ci. Il permet aussi le travail à poste fixe et même une automatisation complète de la coupe.

Les modules ainsi suspendus verticalement sur les barres ou chariots 11 sont entraînés dans un plan horizontal, par l'intermédiaire de moyens d'entraînement en translation (non représentés).

Les éléments porteurs ou rails 12 sont eux-mêmes disposés à poste fixe sur le bâti 13 de la serre.

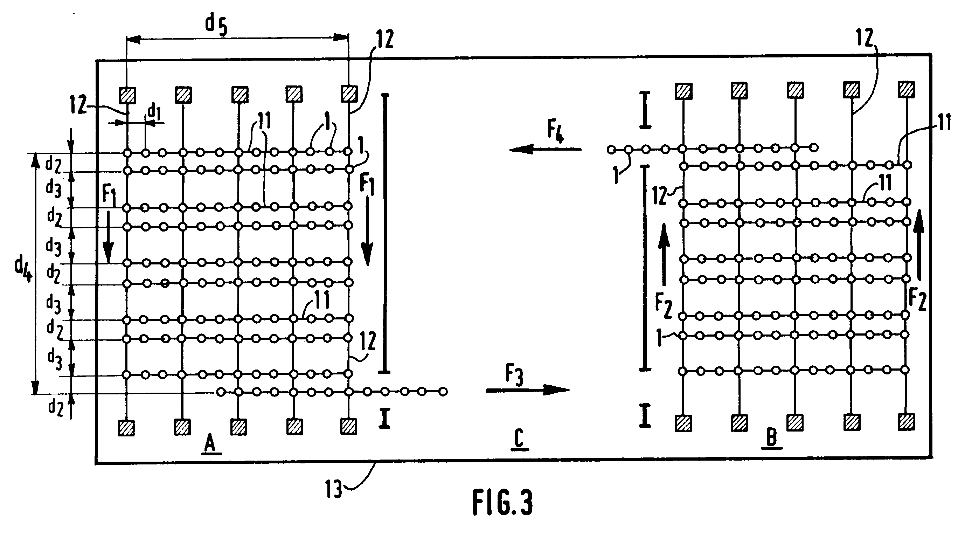

Selon un exemple de réalisation représenté sur la Figure 3, l'installation comporte au moins deux séries de lignes de modules parallèles, disposées également de manière parallèle entre elles.

Plus précisément, les séries de lignes de modules parallèles constituent des zones A, B séparées entre elles par une aire d'intervention C. Dans la zone A les modules se déplacent dans le sens longitudinal selon la flèche F1 et dans la zone B selon la flèche F2. Lors du déplacement des modules 1, chaque chariot 11 pousse celui qui est devant lui, vu dans le sens de la flèche F1, ou respectivement de la flèche F2. Les moyens de transfert latéral (sens F3) des barres d'extrémité ou chariots 11 de la zone A permettent de les faire passer dans la zone B après avoir traversé l'aire d'intervention C, qui est isolée par rapport aux zones de translation A, B.

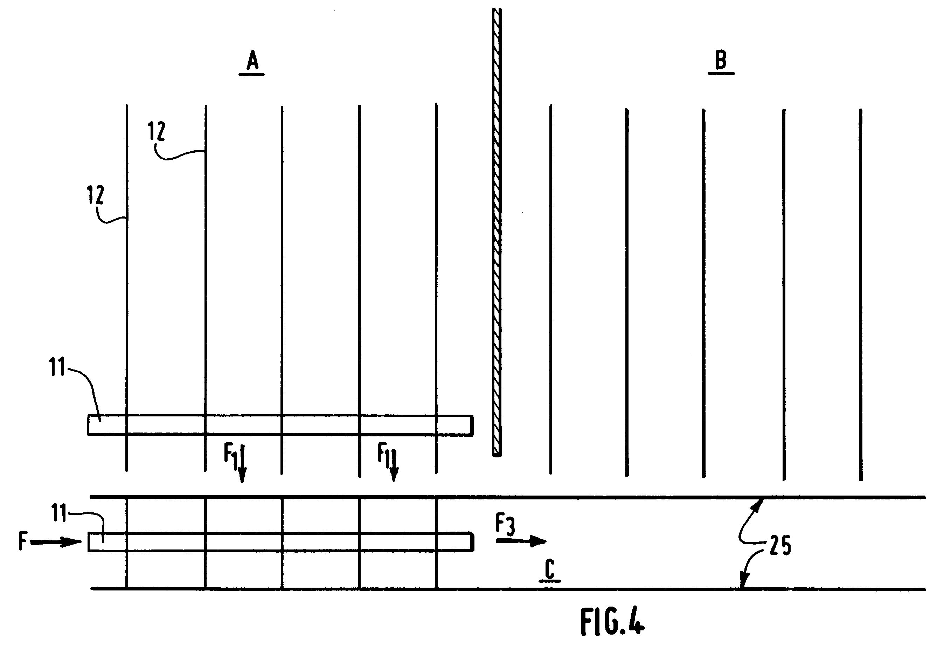

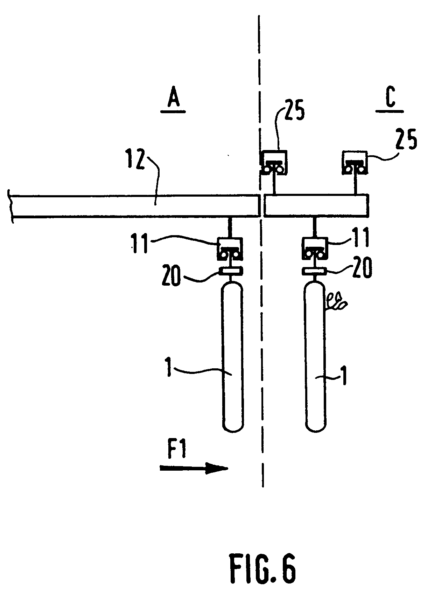

L'installation comporte à cet effet des rails transversaux 25 (Figures 4 et 6) qui sont disposés à l'extrémité de la serre et servent au déplacement transversal des modules.

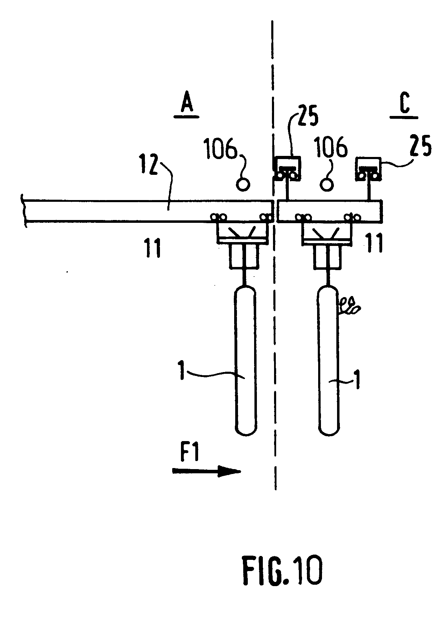

La Figure 10 illustre le même système de déplacement, dans le cas des modules conformes à la variante représentée à la Figure 7.

Comme le montrent particulièrement bien les Figures 4 et 6, le transfert latéral d'une barre ou d'un chariot 11 de la zone A à la zone B s'effectue par coulissement du chariot 11 concerné sur les rails 25 d'extrémité.

En fin de cycle, donc après passage dans les zones A et B, les barres ou chariots 11 supportant une série de modules de culture 1 sont évacuées selon la flèche F, dans une zone située entre les zones A et B.

Une telle conception offre l'avantage de pouvoir opérer sur les plantes sans être obligé de pénétrer dans les zones A et B où évoluent les plantes, ce qui évite les disséminations des maladies (virus, bactéries..).

Selon certaines particularités de réalisation, les plantes 4 sont piquées dans chaque module selon une spirale ou hélice.

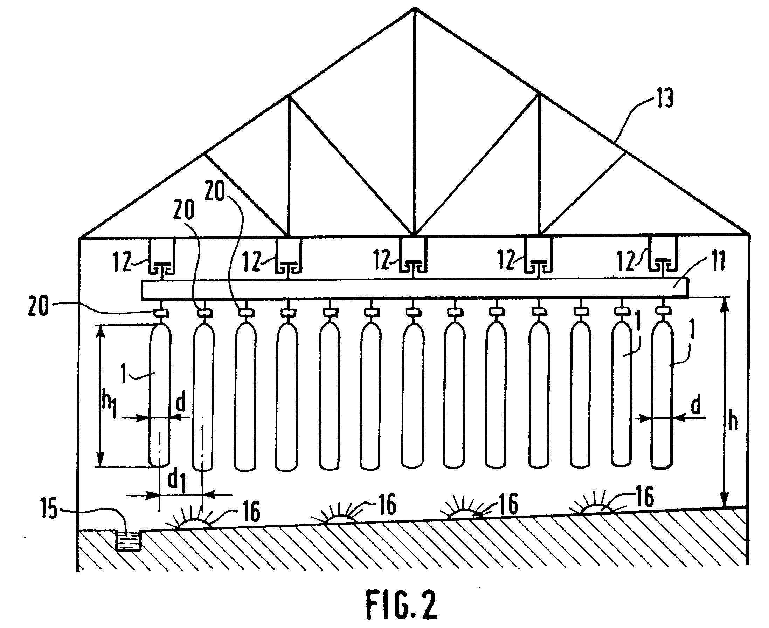

Par ailleurs, l'éclairage est obtenu grâce à une source lumineuse classique, représentée sur les Figures 2 et 8 par des lampes 16 dont les longueurs d'onde émises correspondent à celles absorbées par les plantes. De plus, il est avantageusement complété par l'utilisation de fibres optiques, ce qui permet de corriger ponctuellement les déficits en lumière. Les fibres optiques transportent une lumière froide, ce qui permet de situer l'émission à proximité immédiate des plantes, tout en évitant les systèmes de ventilation nécessaires lors de l'utilisation de sources lumineuses classiques. Le rythme d'émission est adapté au rendement photosynthétique optimum et à la photopériode spécifique.

Tel que représenté sur les Figures 1 et 2, l'éclairage artificiel classique 16 est disposé sous les modules pour une diffusion du bas vers le haut à une distance de 80 à 100 cm, afin d'éviter les brûlures sur les feuilles.

Selon un exemple d'application concret, le module de culture 1 ci-avant décrit permet d'augmenter la production de boutures de Pelargonium x hortorum et hederaefolium obtenues par voie végétative.

Par rapport à la culture classique, la plantation des pieds-mère sur un support vertical permet d'augmenter considérablement le nombre de ces pieds-mère au mètre carré, et donc le nombre de boutures produites par mètre carré. La productivité se trouve ainsi multipliée.

Le matériel végétal est constitué de jeunes plants 4 de Pelargonium x hortorum et hederaefolium de différents cultivars racinés d'une part et coupés d'autre part. Ces plantes sont issues de pieds-mère certifiés indemnes de bactérioses et de viroses (Société GERAFLOR).

Le module de culture 1 est vertical, de forme cylindrique, de 180 cm de hauteur "h1" et de 15 cm de diamètre "d", constitué d'une enveloppe 2 pyrodégradable tissée, contenant des fibres de bois calibrées 3 passées à haute température, de marque HORTIFIBRE. Ils ont un poids humide (après ressuyage) de 15 kg.

L'installation représentée sur les Figures 2 et 8 comprend 10 chariots 11 de 13 modules 1 chacun. Il est bien entendu que le nombre de modules peut être différent de 13.

A titre d'exemple, les modules I sont suspendus aux chariots 11 situés à une hauteur "h" de 2 m 50 du sol et à une distance "d1" de 45 cm l'un de l'autre. L'écartement "d2", "d3" entre les lignes de module 1 est de 50 à 90 cm alternativement. Ainsi, comme le montre bien la Figure 3, les modules couvrent une

$$\text{surface } S = (5 \times 50 \text{ cm}) + (4 \times 90 \text{ cm}) \times (12 \times 45 \text{ cm})$$

soit 32,94 m$^2$
pour un nombre de modules de

$$13 \times 10 = 130 \text{ modules}$$

soit 4 modules/m$^2$ environ.

Bien entendu l'écartement précité pourrait aussi être régulier.

Après 6 mois d'expérimentation, le rendement en boutures par pied-mère a pu être calculé pour divers cultivars (Tableau 1).

Si l'on compare les rendements obtenus en culture classique à ceux obtenus en culture verticale dans l'installation selon l'invention, on obtient les résultats suivants (Tableau 2 ci-après):

TABLEAU 2

| Comparaison des rendements | | |
|---|---|---|
| Type de culture | Nombre de pieds mère/m$^2$ | Nombre moyen de boutures/m$^2$ (après 6 mois de culture) |
| Classique (containers) | 12 | 360 |
| Modules verticaux (selon l'invention) | 140 | 1681 |
| soit un coefficient multiplicatif de 4,6. | | |

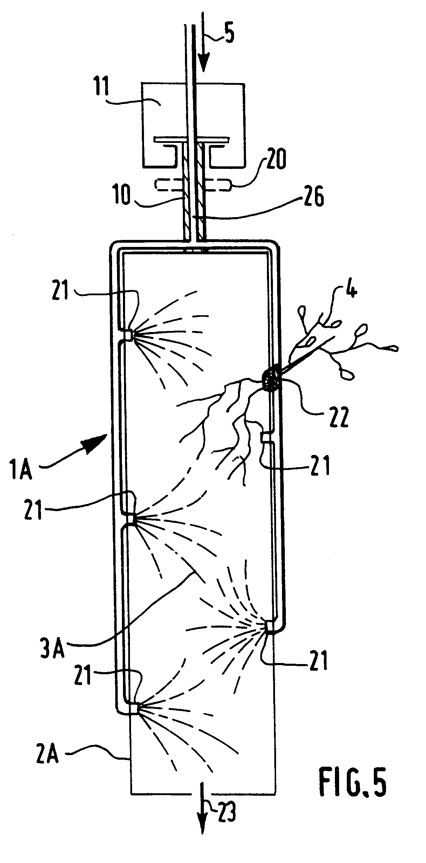

La variante de réalisation de l'invention représentée sur la Figure 5 diffère essentiellement de la précédente en ce que le moyen de culture 3A du module 1A consiste en une atmosphère aqueuse saturée d'une solution nutritive, selon la technique dite aérohydroponique.

Dans ce cas, le contenant 2A est constitué par une enveloppe rigide et imperméable.

Cette enveloppe est préférentiellement opaque et blanche.

L'atmosphère aqueuse est obtenue par des gouttelettes en suspension dans l'air formées à partir de buses de pulvérisation 21 traversant la paroi du contenant 2A et alimentées en solution nutritive par une conduite externe sous pression 26.

Les plantes 4 sont fixées sur le contenant 2A par l'intermédiaire d'une motte de substrat hors-sol 22.

Cette technique d'aérohydroponie permet d'éliminer totalement le substrat 3 de la première forme de réalisation (Figure 1). La solution nutritive est pulvérisée directement à l'intérieur de chaque module, pour être récupérée en partie basse, comme indiqué en 23. La culture est ainsi réalisée par contact d'une atmosphère saturée en solution nutritive et des racines qui se forment sur la motte 22 de substrat hors-sol.

Selon cette technique d'aérohydroponie il n'est pas nécessaire que les racines des plantes cultivées soient en permanence en contact avec la solution nutritive pulvérisée. Celle-ci peut être introduite dans le contenant 2A par intermittence, selon un cycle prédéterminé par exemple.

Il est également à noter, que si cela est nécessaire, par exemple lors du passage des modules de la zone A à la zone C, la conduite d'alimentation 26 peut être débranchée.

Les signes de référence insérés après les caractéristiques techniques mentionnées dans les revendications, ont pour seul but de faciliter la compréhension de ces dernières, et n'en limitent aucunement la portée.

TABLEAU 1

| Rendement des pieds-mère de Pelargonium (en nombre de boutures par pied-mère) en système de culture vertical hors-sol après 6 mois de culture | | | | | | | | | | | | | |
|---|---|---|---|---|---|---|---|---|---|---|---|---|---|
| Cultivar | Modules N° | | | | | | | | | | Total boutures | Moyenne par module | Rendement P.M. |
| | 1 | 2 | 3 | 4 | 5 | 6 | 7 | 8 | 9 | 10 | | | |
| Tavira | 337 | 300 | 370 | 347 | 407 | 351 | 380 | 353 | 359 | 299 | 3503 | 350.3 | 10.01 |
| Palais | 274 | 340 | 358 | 394 | 377 | 361 | 345 | 374 | 313 | 252 | 3388 | 338.8 | 9.68 |
| Decora Imperial | 393 | 388 | 522 | 488 | 494 | 482 | 475 | 409 | 466 | 424 | 4541 | 454.1 | 12.97 |
| Balcon Imperial | 839 | 89* | 764 | 604 | 651 | 584 | 524 | 452 | 464 | 407 | 5378 | 537.8 | 15.36 |
| 10 modules par Cultivar 35 pieds-mère par module 4 modules par m$^2$. | | | | | | | | | | | | | |

**Revendications**

1. Installation pour la culture hors-sol de plantes, comprenant des modules mobiles, suspendus verticalement de manière à former des lignes de modules (1, 1A), qui reçoivent les plantes (4) et sont alimentés par une solution nutritive (5), caractérisée en ce que chacun desdits modules (1, 1(A) comprend:

   - un contenant (2, 2A) de forme cylindrique dont le diamètre est compris environ entre 5 et 50 cm et la hauteur "hl" est comprise environ entre 20 cm et 300 cm,
   - un moyen de culture renfermé dans le contenant (2, 2A),

   en ce que les modules (1, 1A) sont animés, d'une part, d'un mouvement rotatif autour de leur axe vertical (10) pour l'obtention d'une répartition adéquate de la lumière pour chaque plante (4) d'un même module (1, 1A), le rythme de la rotation étant adapté aux besoins d'homogénéisation de la lumière et aux exigences photopériodiques de l'espèce cultivée et, d'autre part, d'un mouvement de translation (F1, F2) permettant de déplacer horizontalement les modules (1, 1A), et en ce que les séries de lignes de modules parallèles (1, 1A) constituent des zones (A, B) séparées entre elles par une aire d'intervention (C), avec des moyens (25) de transfert dans un sens (F3) depuis l'extrémité d'une zone (A), vers la zone voisine (B) dans laquelle les modules (1) se déplacent en sens inverse, après passage dans ladite aire d'intervention (C), qui est isolée par rapport aux zones de translation (A, B).

2. Installation selon la revendication 1, caractérisée en ce que le moyen de culture est constitué par un substrat (3) composé de fibres dont le foisonnement naturel offre un volume d'air compris entre 30 et 35%, lesdites fibres étant compactées pour obtenir une densité supérieure à 50 kg/m$^3$, préférentiellement comprise entre 100 kg/m$^3$ et 300 kg/m$^3$.

3. Installation selon la revendication 1 ou 2, caractérisée en ce que le contenant (2) est un élément de contention du substrat (3), constitué d'un matériau inextensible et perçable sans se déchirer lors du piquage des plantes (4) dans le substrat (3).

4. Installation selon la revendication 3, caractérisée en ce que le matériau constituant l'élément de contention (2) est un matériau plastique, d'épaisseur 90 $\mu$m à 100$\mu$m, opaque et de couleur blanche.

5. Installation selon l'une des revendications 3 ou 4, caractérisée en ce que la solidité de l'élément de contention (2) est accrue par l'utilisation à l'intérieur et/ou à l'extérieur d'un filet à petites mailles, par exemple en polyéthylène ou polypropylène.

6. Installation selon l'une quelconque des revendications 1 à 5, caractérisée en ce que les plantes (4) sont piquées dans chaque module (1) selon une spirale ou hélice (14).

7. Installation selon l'une quelconque des revendications 1 à 6, caractérisée en ce que le substrat (3) présente des propriétés telles, qu'en combinaison avec les dimensions du contenant, elles permettent une bonne percolation de la solution nutritive (5) pour son enrichissement régulier et homogène sur toute sa hauteur (h1), notamment en sels minéraux.

8. Installation selon l'une quelconque des revendications 1 à 7, caractérisée en ce que le substrat (3) possède les propriétés suivantes :

   - faible capacité d'échange
   - stérilité
   - texture fibreuse
   - légèreté, son poids ne dépassant pas environ 15 kg lorsqu'il est saturé de solution nutritive (5)
   - drainant
   - hydrophile
   - compacté
   - recyclable.

9. Installation selon l'une des revendications 7 ou 8, caractérisée en ce que le substrat (3) est obtenu à partir d'éléments :

- naturels, tels que tourbes, pouzzolanes, écorces, sciure, fibres et copeaux de bois, fibres végétales ou animales,
- artificiels, tels que fibres de verre, de silicate, fibres obtenues à partir de roche en fusion, perlite, argile expansée,
- ou des mélanges de tels éléments naturels et artificiels.

**10.** Installation selon la revendication 1, caractérisée en ce que le moyen de culture (3A) du module (1A) consiste en une solution nutritive; ladite solution pouvant contenir complémentairement une microflore antagoniste des microorganismes pathogènes des plantes cultivées et stimulatrice de la croissance des plantes, ladite solution pouvant être mise en contact à l'état liquide avec le substrat selon la technique hydroponique ou directement avec les plantes sous forme d'atmosphère aqueuse saturée, selon la technique dite aérohydroponique.

**11.** Installation selon les revendications 1 et 10, caractérisée en ce que le contenant (3A) est constitué par une enveloppe rigide et imperméable.

**12.** Installation selon les revendications 10 et 11, caractérisée en ce que des buses (21) traversent la paroi du contenant (2A) et assurent une pulvérisation cyclique et contrôlée de substance nutritive.

**13.** Installation selon l'une des revendications 10 à 12, caractérisée en ce que les plantes (4) sont fixées sur le contenant (2A) par l'intermédiaire d'une motte de substrat hors-sol (22).

**14.** Installation selon l'une quelconque des revendications 1 à 13, caractérisée en ce que les modules (1, 1A) sont suspendus verticalement sur des chariots transporteurs ou barres (11) en liaison avec des éléments porteurs (12) ou rails, pour former des lignes de modules (1, 1A) entraînées dans un plan horizontal par l'intermédiaire de moyens d'entraînement en translation.

**15.** Installation selon la revendication 14, caractérisée en ce que les lignes de modules sont parallèles entre elles et écartées de 50 à 90 cm environ.

**16.** Installation selon la revendication 14 ou 15, caractérisée en ce que les modules (1, 1A) sont espacés l'un de l'autre de 35 à 80 cm pour disposer de 2 à 5 modules au mètre carré.

**17.** Installation selon la revendication 15 ou 16, caractérisée en ce qu'elle comporte au moins deux séries de lignes de modules parallèles (1, 1A), disposées également de manière parallèle entre elles.

**18.** Installation selon l'une quelconque des revendications 1 à 17, caractérisée en ce que la solution nutritive (5) alimentant chaque module (1, 1A) est récupérée à la partie inférieure de celui-ci par un dispositif de récupération (15), ladite solution (5) étant ensuite recyclée à l'aide d'une pompe (7).

**19.** Installation selon l'une quelconque des revendications 1 à 18, caractérisée en ce que les plantes (4) bénéficient également d'un éclairage artificiel classique complémentaire (16) disposé sous les modules (1, 1A) dont les rayons lumineux sont diffusés du bas vers le haut.

**20.** Installation selon l'une quelconque des revendications 1 à 19, caractérisée en ce que les déficits éventuels de lumière sont corrigés ponctuellement par des fibres optiques transportant une lumière froide à proximité immédiate des plantes (4) et selon des longueurs d'ondes correspondant à celles absorbées par lesdites plantes (4).

**21.** Modules (1, 1A) tels que mis en oeuvre dans l'installation selon l'une quelconque des revendications 1 à 20.

**Claims**

**1.** An installation for off-soil cultivation of plants, comprising mobile modules, hung vertically, in order to form lines of modules (1, 1A), which accommodate the plants (4) and which are supplied by a nutritive solution (5), characterised in that each of the said modules (1, 1A) comprises :

- a container (2, 2A) cylindrical in shape whose diameter ranges between approx. 5 and 50 cm and whose height "h1" ranges between approx. 20 cm and 300 cm,
- a means of cultivation enclosed in the said container (2, 2A), in that the modules (1, 1A) are animated, on the one hand, by a rotational motion around their vertical axis (10) to cause adequate distribution of light for each plant (4) of a given module (1, 1A), whereas the rotation rhythm is suited to the homogenisation needs of light and to the photoperiodic requirements of the species cultivated and, on the other hand, a translation motion (F1, F2) enabling to move the modules (1, 1A) horizontally, and in that the series of parallel module lines (1, 1A) constitute zones (A, B) separated by an intervention area ( C), with means (25) for transferring in one direction (F3) from the end of a zone (A), to the neighbouring zone (B) in which the modules (1) move in reverse direction, after passing through the said intervention area ( C), which is isolated with respect to the translation zones (A, B).

2. An installation according to claim 1, characterised in that the cultivation means is made up of a substrate (3) consisting of fibres whose natural mellowness offers an air volume ranging between 30 and 35 %, whereby the said fibres are compacted to obtain a density above 50 kg/m3, preferably ranging between 100 kg/m3 and 300 kg/m3.

3. An installation according to claim 1 or 2, characterised in that the container (2) is a retaining element for the substrate (3), constituted of an inextensible and drillable material, which does not tear when plants (4) are pricked in the substrate (3).

4. An installation according to claim 3, characterised in that the material constituting the retaining element (2) is a plastic material, of thickness ranging between 90 $\mu$m and 100 $\mu$m, opaque and white in colour.

5. An installation according to any of the claims 3 or 4, characterised in that the stiffness of the retaining element (2) is increased by the internal and/or external use of a small mesh net, for instance out of polyethylene or polypropylene.

6. An installation according to any of the claims 1 to 5, characterised in that the plants (4) are pricked in each module (1) following a spiral or helix (4) pattern.

7. An installation according to any of the claims 1 to 6, characterised in that the substrate (3) exhibits properties such that in combination with the sizes of the container, they enable satisfactory percolation of the nutritive solution (5) for its regular and homogeneous enrichment over its whole height (h1), notably in mineral salts.

8. An installation according to any of the claims 1 to 7, characterised in that the substrate (3) exhibits the following properties :

- low exchange capacity
- sterility
- fibrous texture
- lightness, its weight not exceeding approx. 15 kg when saturated with nutritive solution (5)
- draining
- hydrophilic
- compacted
- recyclable.

9. An installation according to one of the claims 7 or 8, characterised in that the substrate (3) is obtained from elements such as :

- natural elements, for instance peat, puzzolana, bark, sawdust, fibre or wood chip, vegetal or animal fibre,
- artificial elements, for instance : glass fibre, silicate fibre, fibres from molten rock, perlite, expanded clay,
- or mixtures of said natural and artificial elements.

10. An installation according to claim 1, characterised in that the cultivation means (3A) of the module (1A) consists of a nutritive solution; whereas the said solution may contain, additionally, a microflora antagonistic of the morbific microorganisms of the plants cultivated and fostering the growth of the plants, whereas the said solution can be placed in contact in liquid condition with the substrate according to the hydroponic technology or directly with the plants in the form of saturated aqueous atmosphere, according to the so-called aero-hydroponic technology.

11. An installation according to claims 1 and 10, characterised in that the container (3A) consists of a stiff and impervious envelope.

12. An installation according to claims 10 and 11, characterised in that nozzles (21) go through the wall of the container (2A) and thus ensure cyclic and controlled spraying of a nutritive substance.

13. An installation according to one of the claims 10 to 12, characterised in that the plants (4) are attached to the container (2A) using a clod of off-soil substrate (22).

14. An installation according to any of the claims 1 to 13, characterised in that the modules (1, 1A) are hung vertically on conveyor carriages or bars (11) in connection with carrying elements (12) or rails, in order to form lines of modules (1, 1A) driven on a horizontal plane by translation driving means.

15. An installation according to claim 14, characterised in that the lines of modules are parallel to each other and spaced by approx. 50 to 90 cm.

16. An installation according to claim 14 or 15, characterised in that the modules (1, 1A) are spaced from one another by 35 to 80 cm to produce 2 to 5 modules per square meter.

17. An installation according to claim 15 or 16, characterised in that it comprises at least two series of lines of parallel modules (1, 1A), also spaced parallel to one another.

18. An installation according to any of the claims 1 to 17, characterised in that the nutritive solution (5) feeding each module (1, 1A) is collected at the lower part of the said module by a recovery device (15), whereas the said solution (5) is then recycled using a pump (7).

19. An installation according to any of the claims 1 to 18, characterised in that the plants (4) also benefit from an additional classical artificial lighting system (16) arranged under the modules (1, 1A) whose luminous rays are diffused from bottom to top.

20. An installation according to any of the claims 1 to 19, characterised in that the possible losses of light are corrected on a case-to-case basis by optic fibre conveying cold light to the immediate proximity of the plants (4) and with wavelengths corresponding to those absorbed by the said plants (4).

21. Modules (1, 1A) such as those implemented in the installation according to any of the claims 1 to 20.

## Patentansprüche

1. Installation für eine erdlose Pflanzenkultur, mit mobilen Modulen, die vertikal derart aufgehängt sind, daß sie Reihen von Modulen (1,1A) bilden, welche die Pflanzen (4) aufnehmen und mit einer Nährlösung (5) versorgt werden, dadurch gekennzeichnet, daß jedes der Module (1,1A) aufweist;

   - einen zylindrischen Behälter (2,2A), dessen Durchmesser ungefähr zwischen 5 und 50 cm beträgt und dessen Höhe "h1" ungefähr zwischen 20 cm und 300 cm beträgt,
   - ein in dem Behälter (2,2A) eingeschlossenes Kultur-Mittel,

   daß die Module (1,1A) einerseits zu einer Drehbewegung um ihre vertikale Achse (10) angeregt sind, um eine adäquate Verteilung von Licht auf sämtliche Pflanzen eines Moduls (1,1A) Zu erzielen, wobei der Dreh-Rhythmus auf die Erforderniese der Homogenisierung des Lichtes und auf die lichtperiodischen Bedürfnisse der kultivierten Spezies abgestimmt sind, und andererseits zu einer Translationsbewegung (F1,F2), die eine horizontale Verschiebung der Module (1,1A) ermöglicht, und daß die Sätze paralleler Reihen von Modulen (1,1A) Zonen (A,B) bilden, die durch einen zwischen den Zonen liegenden Interventionsbereich (C) getrennt sind, mit Einrichtungen (25), um ausgehend vom Ende einer Zone (A) in einer Richtung (F3) eine Transferbewegung zu der benachbarten Zone (B) durchzuführen, in der die Module (1) nach dem Durchtritt durch den Interventionsbereich (C), der von den Translationszonen (A,B) getrennt ist, in die Gegenrichtung verschoben werden.

2. Installation nach Anspruch 1, dadurch gekennzeichnet, daß das Kultur-Mittel aus einem Substrat (3) besteht, das aus Fasern besteht, deren natürliche Volumenzunahme ein Luft-Volumen zwischen 30 und 35% bewirkt, wobei die Fasern derart kompaktiert sind, daß eine Dichte größer als 50 kg/m$^3$ erzielt wird, die vorzugsweise zwischen 100 kg/m$^3$ und 300 kg/m$^3$ beträgt.

3. Installation nach Anspruch 1 oder 2, dadurch gekennzeichnet, daß der Behälter (2) ein das Substrat (3) haltendes Element ist, das aus einem Material besteht, das nichtdehnbar und beim Einstecken der Pflanzen (4) in das Substrat (3) ohne Zerreißen perforierbar ist,

4. Installation nach Anspruch 3, dadurch gekennzeichnet, daß das Material des Halteelementes (2) ein opakes, weißes Kunststoffmaterial mit einer Dicke von 90 μm bis 100 μm ist.

5. Installation nach einem der Ansprüche 3 oder 4, dadurch gekennzeichnet, daß die Festigkeit des Halteelementes (2) erhöht ist, indem an seinem Inneren und/oder Äußeren ein engmaschiges Netz verwendet ist, das z.B. aus Polyethylen oder Polypropylen besteht.

6. Installation nach einem der Ansprüche 1 bis 5, dadurch gekennzeichnet, daß die Pflanzen (4) nach Art einer Spirale oder Wendel (14) in jedes Modul (1) eingesteckt sind.

7. Installation nach einem der Ansprüche 1 bis 6, dadurch gekennzeichnet, daß das Substrat (3) Eigenschaften aufweist, die in Kombination mit den Abmessungen des Behälters eine gute Perkolation der Nährlösung (5) zwecks regelmäßiger und homogener Anreicherung der Nährlösung, insbesondere mit Mineralsalzen, über die gesamte Höhe (h1) des Substrats ermöglichen.

8. Installation nach einem der Ansprüche 1 bis 7, dadurch gekennzeichnet, daß das Substrat (3) die folgenden Eigenschaften aufweist:

   - schwache Austauschfähigkeit,
   - Sterilität
   - faserige Struktur
   - Leichtgewichtigkeit, wobei das Gewicht des Substrates bei Sättigung mit Nährlösung (5) nicht mehr als ungefähr 15 kg beträgt
   - drainagefähig
   - hydrophil
   - kompakt
   - recycelbar.

9. Installation nach einem der Ansprüche 7 oder 8, dadurch gekennzeichnet, daß das Substrat (3) aus den folgenden Elementen hergestellt wird:

   - natürliche Stoffe, z.B. Torfe, Puzzolane, Rinden, Sägespäne, Holzfasern und -späne, pflanzliche oder tierische Fasern,
   - synthetische Stoffe, z.B, Glasfasern, Silicatfasern, auf Basis geschmolzenen Gesteins erhaltene Fasern, Perlit, Blähton,
   - oder Mischungen aus derartigen natürlichen und synthetischen Elementen.

10. Installation nach Anspruch 1, dadurch gekennzeichnet, daß das Kultur-Mittel (3A) des Moduls (1A) aus einer Nährlösung besteht; wobei die Nährlösung einen komplementären Anteil eines Mikroflora-Gegenmittels für pathogene Mikroorganismen der gezüchteten Pflanzen und ein Stimulanz für das Wachstum der Pflanzen enthält, wobei die Lösung im flüssigen Zustand mittels hydroponischer Technik mit dem Substrat in Kontakt gebracht werden kann oder in Form einer gesättigten wässrigen Atmosphäre gemäß der sogenannten aerohydroponischen Technik direkt mit den Pflanzen in Kontakt gebracht werden kann.

11. Installation nach Anspruch 1 und 10, dadurch gekennzeichnet, daß der Behälter (3A) aus einer starren und undurchlässigen Hülle besteht.

12. Installation nach Anspruch 10 und 11, dadurch gekennzeichnet, daß Düsen (21) durch die Wand des Behälters (2A) hindurch verlaufen und eine zyklische und gesteuerte Zerstäubung der Nährsubstanz gewährleisten.

13. Installation nach einem der Ansprüche 10 bis 12, dadurch gekennzeichnet, daß die Pflanzen (4) durch einen Ballen aus erdlosem Substrat (22) an dem Behälter (2A) festgelegt sind.

14. Installation nach einem der Ansprüche 10 bis 13, dadurch gekennzeichnet, daß die Module (1,1A) an Transportschlitten oder Stangen (11), die mit Trageelementen (12) oder Schienen zusammenwirken, vertikal aufgehängt sind, um Reihen von Modulen (1,1A) zu bilden, die durch Translationsbewegungseinrichtungen in einer horizontalen Ebene bewegt werden.

15. Installation nach Anspruch 14, dadurch gekennzeichnet, daß die Reihen der Module zueinander parallel sind und gegenseitige Abstände von ungefähr 50 bis 90 cm aufweisen.

16. Installation nach Anspruch 14 oder 15, dadurch gekennzeichnet, daß die Module (1,1A) gegenseitige Abstände von ungefähr 35 bis 80 cm aufweisen, so daß 2 bis 5 Module pro Quadratmeter angeordnet werden können.

17. Installation nach Anspruch 15 oder 16, dadurch gekennzeichnet, daß die Installation mindestens zwei aus parallelen Reihen von Modulen (1,1A) bestehende Sätze aufweist, die ebenfalls parallel zueinander angeordnet sind.

18. Installation nach einem der Ansprüche 1 bis 17, dadurch gekennzeichnet, daß die jedes Modul (1,1A) versorgende Nährlösung (5) in dem Bereich unterhalb des Moduls von einer Aufnahmevorrichtung (15) aufgenommen wird, wobei die Lösung (5) anschließend mittels einer Pumpe (7) recycelt wird.

19. Installation nach einem der Ansprüche 1 bis 18, dadurch gekennzeichnet, daß die Pflanzen (4) ferner einer herkömmlichen ergänzenden künstlichen Beleuchtung (16) ausgesetzt sind, die unter den Modulen (1,1A) angeordnet ist und deren Lichtstrahlen von unten nach oben ausgegeben werden.

20. Installation nach einem der Ansprüche 1 bis 19, dadurch gekennzeichnet, daß eventuelle Beleuchtungsdefizite punktuell durch optische Fasern ausgeglichen werden, die der unmittelbaren Umgebung der Pflanzen ein Kaltlicht zuführen, dessen Wellenlängen denjenigen entsprechen, die von den Pflanzen (4) absorbiert werden.

21. Module (1,1A) des Typs, der in der Installation gemäß einem der Ansprüche 1 bis 20 verwendet wird.

**FIG.1**

HAUT

BAS

$h_1$   $h$   $d$

EP 0 610 137 B1

FIG.2

FIG.3

EP 0 610 137 B1

FIG.4

FIG.5

A      C

25

25

12

11     11

20     20

1     1

F1

# FIG.6

**FIG.7**

EP 0 610 137 B1

EP 0 610 137 B1

FIG.8

FIG. 9

FIG.10